# EUROPEAN PATENT SPECIFICATION

(11) **EP 4 391 611 B1**
(45) Date of publication and mention of the grant of the patent: **26.11.2025**
(21) Application number: 22885543.3
(22) Date of filing: 26.09.2022
(51) Int. Cl.: H04W 8/14, H04L 65/1016, H04L 65/1073, H04W 60/04, H04W 76/12

(54) **INFORMATION TRANSMISSION METHOD AND APPARATUS**
INFORMATIONSÜBERTRAGUNGSVERFAHREN UND -VORRICHTUNG
PROCÉDÉ ET APPAREIL DE TRANSMISSION D'INFORMATIONS

(30) Priority: 30.10.2021 CN 202111278447
(43) Date of publication of application: 26.06.2024
(73) Proprietor: Huawei Technologies Co., Ltd., Shenzhen, Guangdong 518129 (CN)
(72) Inventor: WEI, Haitao, Shenzhen, Guangdong 518129 (CN); SHEN, Guangjie, Shenzhen, Guangdong 518129 (CN); ZHANG, Shengwen, Shenzhen, Guangdong 518129 (CN)
(74) Representative: Epping - Hermann - Fischer
(86) International application number: PCT/CN2022/121235
(87) International publication number: WO 2023/071656

(56) References cited:
- US-A1- 2017 064 544
- GSM ASSOCIATION, GSM ASSOCIATION, GSMA FLOOR2 THE WALBROOK BUILDING 25 WALLBROOK LONDON, UK, 11 June 2021 (2021-06-11), XP040721028
- HUAWEI ET AL: "IMS data channel media feature tag in Accept-Contact header", vol. CT WG1, no. Electronic meeting; 20210520 - 20210528, 2 June 2021 (2021-06-02), XP052019092, Retrieved from the Internet <URL:https://ftp.3gpp.org/3guInternal/3GPP_Ultimate_CRPacks/CP-211156.zip 24173_CR0147r1_(Rel-17)_C1-213817 was C1-213556_Rel-17_24173_CR0147 IMS data channel media feature tag in Accept-Contact header.docx> [retrieved on 20210602]
- HUAWEI ET AL: "IMS data channel registration", vol. CT WG1, no. E-meeting; 20211111 - 20211119, 4 November 2021 (2021-11-04), XP052178956, Retrieved from the Internet <URL:https://ftp.3gpp.org/tsg_ct/WG1_mm-cc-sm_ex-CN1/TSGC1_133e/Docs/C1-216893.zip C1-216893_Rel-17_TEI17_24229 IMS data channel registration.docx> [retrieved on 20211104]
- "3rd Generation Partnership Project; Technical Specification Group Services and System Aspects; Study on system architecture enhancement for next generation real time communication; Phase 2 (Release 18)", no. V0.4.0, 5 September 2022 (2022-09-05), pages 1 - 111, XP052211589, Retrieved from the Internet <URL:https://ftp.3gpp.org/Specs/archive/23_series/23.700-87/23700-87-040.zip 23700-87-040-rm v2.doc> [retrieved on 20220905]
- HUAWEI, HISILICON: "IMS data channel registration", 3GPP TSG-CT WG1 MEETING #133-E, C1-216893, 4 November 2021 (2021-11-04), XP052178956
- HUAWEI, HISILICON, ERICSSON: "IMS data channel at the II-NNI", 3GPP TSG-CT3 MEETING #115E, C3-212593, 23 April 2021 (2021-04-23), XP051998083
- HUAWEI, HISILICON: "IMS data channel media feature tag in Accept-Contact header", 3GPP TSG-CT WG1 MEETING #130-E, C1-213817, 27 May 2021 (2021-05-27), XP052015390
- "3rd Generation Partnership Project; Technical Specification Group Core Network and Terminals; Web Real-Time Communications (WebRTC) access to the IP Multimedia (IM) Core Network (CN) subsystem (IMS); Stage 3; Protocol specification (Release 15)", 3GPP TS 24.371, no. V15.3.0, 18 December 2020 (2020-12-18), pages 1 - 39, XP051975217

## Description

### TECHNICAL FIELD

This application relates to the field of communication technologies, and in particular, to an information transmission method and an apparatus.

### BACKGROUND

An Internet protocol multimedia subsystem (internet protocol multimedia subsystem, IMS) is a common network architecture for providing a multimedia service over an Internet protocol (internet protocol, IP) based network. An IMS data channel, which is an additional data channel provided by the IMS on a basis of a voice channel and a video channel, supports a terminal in downloading a web (Web) technology-based application from the IMS and implements real-time and non-real-time data communication between same web applications on different terminals.

In a current IMS registration process of user equipment (user equipment, UE), only the UE indicates to the IMS whether the UE supports a data channel, but the IMS does not indicate to the UE whether the IMS supports a data channel. As a result, the UE learns whether the IMS supports the data channel only after session description protocol (session description protocol, SDP) negotiation. This results in low efficiency of the UE in learning whether the IMS supports the data channel, and reduces efficiency of successful SDP negotiation.

GSMA, "IMS Profile for Voice and SMS Version 16.0 28", XP040721028, describes the minimum set of IMS features required in relation to the many 3GPP standards to be implemented to guarantee interoperability.

3GPP C1- 213817, "IMS data channel media feature tag in Accept-Contact header", XP052019092, describes the IMS data channel media feature tag in Accept-Contact header.

### SUMMARY

Embodiments of this application provide an information transmission method and an apparatus. An IMS actively indicates, to a user equipment, whether the IMS supports a data channel, thereby improving efficiency of the user equipment in learning whether the IMS supports the data channel, helping the user equipment initiate, in a targeted manner, a session negotiation request related to the data channel to the IMS that supports the data channel, and improving efficiency of successful session negotiation.

According to a first aspect, an information transmission method is provided, applied to an Internet protocol multimedia subsystem IMS. The method includes: An S-CSCF in the IMS receives a registration request message of a user equipment; and the S-CSCF sends a registration response message for the registration request message, where the registration response message includes indication information indicating whether the IMS supports a data channel.

It can be learned that, in this embodiment of this application, the IMS actively indicates, to the user equipment, whether the IMS supports the data channel, thereby improving efficiency of the user equipment in learning whether the IMS supports the data channel, helping the user equipment initiate, in a targeted manner, a session negotiation request related to the data channel to the IMS that supports the data channel, and improving efficiency of successful session negotiation.

In an optional example, the registration request message includes indication information indicating that the user equipment supports the data channel.

In this embodiment of this application, when the registration request message sent by the user equipment includes the indication information indicating that the user equipment supports the data channel, the IMS responds, to the user equipment based on the received indication information, the indication information indicating whether the IMS supports the data channel. In this way, the indication information supporting the data channel that is fed back by the IMS is more targeted, and an unnecessary or inopportune feedback from the IMS is avoided.

In an optional example, the method further includes: receiving a session negotiation request message sent by the user equipment, where the session negotiation request message includes information for requesting to establish the data channel with the IMS; and establishing the data channel with the user equipment based on the session negotiation request message.

In this embodiment of this application, after the IMS receives the session negotiation request message sent by the user equipment, because the IMS has responded in a registration phase of the user equipment with the indication information indicating whether the IMS supports the data channel, it may be learned that the user equipment initiates the session negotiation request based on a situation that the IMS supports the data channel. Therefore, when the session negotiation request message includes the information for establishing the data channel, the IMS may directly establish the data channel with the user equipment, and does not need to determine or detect whether the IMS supports the data channel again. In this way, data channel establishment efficiency is improved.

In an optional example, the data channel supports the user equipment in downloading an application from the IMS; and/or the data channel supports data communication between same applications on different user equipments.

According to a second aspect, an information transmission method is provided, and applied to a user equipment. The method includes: sending a registration request message to an IMS; and receiving a registration response message sent by the IMS, where the registration response message includes indication information indicating whether the IMS supports a data channel.

In this embodiment of this application, when receiving the registration response message from the IMS, the user equipment obtains the indication information indicating whether the IMS supports the data channel, thereby improving efficiency of the user equipment in learning whether the IMS supports the data channel, helping the user equipment initiate, in a targeted manner, a session negotiation request related to the data channel to the IMS that supports the data channel, and improving efficiency of successful session negotiation.

In an optional example, the registration request message includes indication information indicating that the user equipment supports the data channel.

In an optional example, the method further includes: sending a session negotiation request message to the IMS in response to an indication that the IMS supports the data channel, where the session negotiation request message includes information for requesting to establish the data channel with the IMS.

In an optional example, the method further includes: sending a session negotiation request message to the IMS in response to an indication that the IMS does not support the data channel, where the session negotiation request message does not include information for requesting to establish the data channel with the IMS.

In this embodiment of this application, the IMS actively indicates, to the user equipment, whether the user equipment supports the data channel, so that the user equipment sends the session negotiation request related to the data channel to the IMS when the IMS supports the data channel, thereby reducing waste of resource preparation and a signaling exchange that may be caused by SDP negotiation initiated by the user equipment when the IMS does not support the data channel.

In an optional example, the session negotiation request message includes a message requesting to establish an audio channel and/or a video channel with the IMS.

According to a third aspect, a communication apparatus is provided, and used in an Internet protocol multimedia subsystem IMS. The apparatus includes: a receiving unit, configured to receive a registration request message of a user equipment; and a sending unit, configured to send a registration response message for the registration request message, where the registration response message includes indication information indicating whether the IMS supports a data channel.

In an optional example, the registration request message includes indication information indicating that the user equipment supports the data channel.

In an optional example, the receiving unit is further configured to: receive a session negotiation request message sent by the user equipment, where the session negotiation request message includes information for requesting to establish the data channel with the IMS; and establish the data channel with the user equipment based on the session negotiation request message.

In an optional example, the data channel supports the user equipment in downloading an application from the IMS; and/or the data channel supports data communication between same applications on different user equipments.

According to a fourth aspect, a communication apparatus is provided. The apparatus includes: a sending unit, configured to send a registration request message to an IMS; and a receiving unit, configured to receive a registration response message sent by the IMS, where the registration response message includes indication information indicating whether the IMS supports a data channel.

In an optional example, the registration request message includes indication information indicating that the user equipment supports the data channel.

In an optional example, the sending unit is further configured to:
send a session negotiation request message to the IMS in response to an indication that the IMS supports the data channel, where the session negotiation request message includes information for requesting to establish the data channel with the IMS.

In an optional example, the sending unit is further configured to:
send a session negotiation request message to the IMS in response to an indication that the IMS does not support the data channel, where the session negotiation request message does not include information for requesting to establish the data channel with the IMS.

In an optional example, the session negotiation request message includes a message requesting to establish an audio channel and/or a video channel with the IMS.

According to a fifth aspect, an embodiment of this application provides a communication apparatus. The apparatus includes a communication interface and at least one processor, and the communication interface is used by the apparatus to communicate with another device. For example, the communication interface may be a transceiver, a circuit, a bus, a module, or another type of communication interface. The at least one processor is configured to invoke a group of programs, instructions, or data, to perform the method described according to the first aspect or the second aspect. The apparatus may further include a memory, configured to store the programs, instructions, or data invoked by the processor. The memory is coupled to the at least one processor, and when the at least one processor executes the instructions or the data stored in the memory, the method described according to the first aspect or the second aspect may be implemented.

According to a sixth aspect, an embodiment of this application further provides a computer-readable storage medium, where the computer-readable storage medium stores instructions. When the instructions are run on a computer, the computer is enabled to perform the method according to the first aspect or any possible implementation of the first aspect, or the computer is enabled to perform the method according to the second aspect or any possible implementation of the second aspect.

According to a seventh aspect, an embodiment of this application provides a chip system. The chip system includes a processor, and may further include a memory. The chip system is configured to implement the method according to the first aspect or any possible implementation of the first aspect, or is configured to implement the method according to the second aspect or any possible implementation of the second aspect, and the chip system may include a chip, or may include a chip and another discrete device.

In a possible example, the chip system further includes a transceiver.

According to an eighth aspect, an embodiment of this application further provides a computer program product, including instructions. When the instructions are run on a computer, the computer is enabled to perform the method according to the first aspect or any possible implementation of the first aspect, or the computer is enabled to perform the method according to the second aspect or any possible implementation of the second aspect.

According to a ninth aspect, an embodiment of this application further provides a communication system, and the communication system may include the communication apparatus according to the first aspect and the second aspect.

### BRIEF DESCRIPTION OF DRAWINGS

To describe the technical solutions in embodiments of this application more clearly, the following briefly describes the accompanying drawings used in describing embodiments.
FIG. 1A is a schematic diagram of a system architecture of an IMS according to an embodiment of this application;
FIG. 1B is a schematic diagram of a multi-channel communication scenario in an IMS according to an embodiment of this application;
FIG. 1C is a schematic diagram of a channel in an IMS according to an embodiment of this application;
FIG. 1D is a schematic diagram of a structure of a bearer protocol according to an embodiment of this application;
FIG. 1E is a schematic diagram of an operating principle of an IMS data channel according to an embodiment of this application;
FIG. 1F is a schematic flowchart of establishing a data channel according to an embodiment of this application;
FIG. 2 is a flowchart of an information transmission method according to an embodiment of this application;
FIG. 3 is a block diagram of a structure of a communication apparatus according to an embodiment of this application;
FIG. 4 is a block diagram of a structure of a communication apparatus according to an embodiment of this application; and
FIG. 5 is a schematic diagram of a structure of an electronic apparatus according to an embodiment of this application.

### DESCRIPTION OF EMBODIMENTS

The terms "first", "second", "third", "fourth", and the like in this specification, the claims, and the accompanying drawings of this application are intended to distinguish between different objects, but are not intended to describe a particular order. In addition, terms such as "include" and "have" and any variant thereof are intended to cover non-exclusive inclusion. For example, a process, method, system, product, or device that includes a series of steps or modules is not limited to the listed steps or modules, but optionally further includes steps or modules that are not listed or that are inherent to the process, method, product, or device.

An "embodiment" mentioned in this specification means that a particular feature, structure, or characteristic described with reference to the embodiment may be included in at least one embodiment of this application. The phrase appearing at various locations in this specification does not necessarily refer to a same embodiment, and is not an independent or alternative embodiment mutually exclusive to another embodiment. A person skilled in the art explicitly or implicitly understands that embodiments described in this specification may be combined with other embodiments.

The term "a plurality of" means two or more. The term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects.

An application scenario of embodiments of this application is first described.

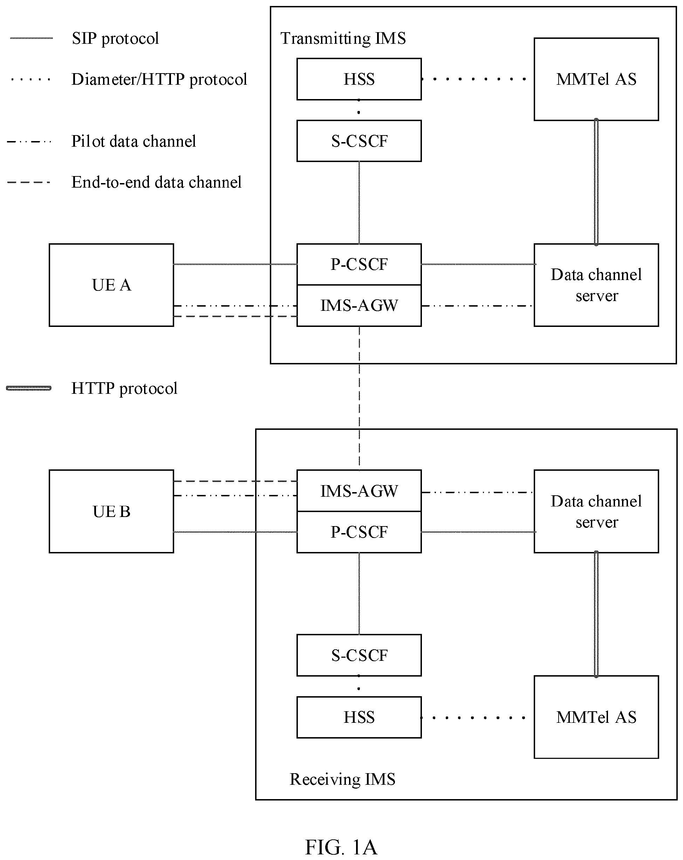

Embodiments of this application are applied to an IMS. Refer to FIG. 1A, FIG. 1A is a schematic diagram of a system architecture of an IMS according to an embodiment of this application. As shown in FIG. 1A, the IMS includes a transmitting IMS and a receiving IMS, where the transmitting IMS is configured to provide support for a transmitting user equipment UE A, and the receiving IMS is configured to provide support for a receiving user equipment UE B. In addition, the IMS may include network elements such as a home subscriber server (home subscriber server, HSS), a serving-call session control function (serving-call session control function, S-CSCF), a proxy-call session control function (proxy-call session control function, P-CSCF), a multimedia telephony application server (multimedia telephony application server, MMTel AS), an IMS-access gateway (IMS-access gateway, IMS-AGW), and a data channel server. The HSS communicates with the S-CSCF and the MMTel AS by using a diameter (diameter) protocol or a hypertext transfer protocol (hypertext transfer protocol, HTTP). The P-CSCF communicates with the S-CSCF and the UE (including UE A or UE B) by using a session initiation protocol (session initiation protocol, SIP). There is a pilot data channel between the IMS-AGW with the UE and the data channel server, and there is an end-to-end data channel between IMS-AGWs at different sides, and between the IMS-AGWs and the UEs respectively supported by the IMS-AGWs.

The following describes terms and network elements involved in the foregoing system architecture.

Home subscriber server (home subscriber server, HSS): a core database that stores subscriber information on a home network of subscribers. The home subscriber server is configured to store subscription information of IMS subscribers on the home network, and provide a management interface for operators and terminal users to customize and modify subscription data. Main information stored in the HSS includes: IMS subscriber identifiers, IMS subscriber security context, and routing information and service subscription information of IMS subscribers.

P-CSCF: the first contact point for a subscriber to access an IMS network in a service application process. The P-CSCF is responsible for serving as an agent of all SIP signaling and completing call routing control; provides quality of service (quality of service, QoS) resource reservation; supports SIP signaling compression to improve bandwidth usage efficiency of an air interface; provides network address translation (network address translation, NAT) control to support NAT penetration of an enterprise network; and maintains a security association with a UE to protect privacy and integrity of signaling between the P-CSCF and the UE.

IMS-AGW: an IMS-access gateway that implements functions such as NAT traversal, media anchoring, and transcoding.

S-CSCF: a service switching center of an IMS network. The S-CSCF is mainly responsible for receiving and processing a registration request of a UE, subscriber management, session control, service switching, service control, SIP message processing, and charging, and can trigger a SIP request to a corresponding application server (application server, AS) based on a triggering principle of an application.

MMTel AS: a multimedia telephony application server. The MMTel refers to an IMS-based multimedia telephony service standard. The MMTel supports telecommunications operators to evolve conventional circuit switching services to IP-based real-time multimedia telephony services, including voice and video calls, messaging services, and video image sharing.

The MMTel AS and the S-CSCF communicate with the HSS by using a diameter protocol or an HTTP protocol.

Data channel server: storing a data channel application and distributing the data channel application to a UE through a pilot data channel. The data channel server is controlled by the MMTel AS.

Pilot data channel: configured to establish a connection to a data channel server in a network by a UE, to obtain a data channel application.

End-to-end data channel: a data channel used for communication between data channel applications on a UE.

UE: a user equipment, also referred to as a terminal device, a mobile station (mobile station, MS), a mobile terminal (mobile terminal, MT), and the like. In embodiments of this application, the user equipment indicates a user equipment that supports an IMS. For example, the UE may be a hand-held device or an in-vehicle device having a wireless connection function. Currently, examples of some terminals are as follows: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

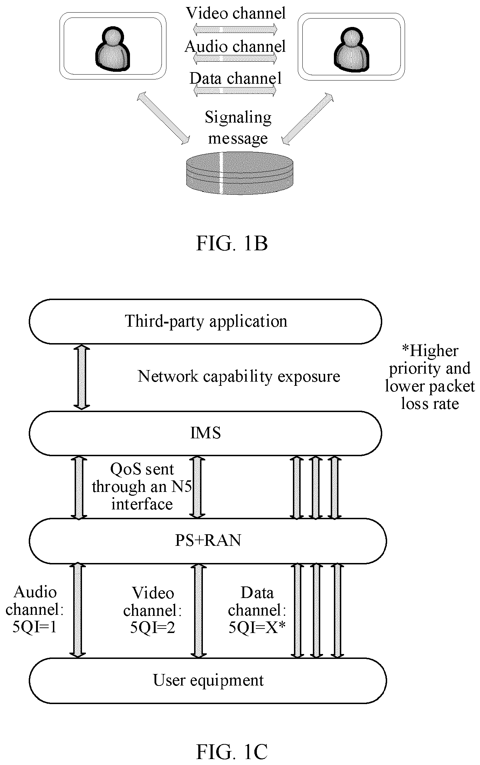

IMS data channel: a new concept appearing in the industry. A main technical feature of the IMS data channel is that a data channel is superimposed based on IMS-based audio and video communication, so as to upgrade IMS-based real-time audio and video communication to real-time interaction, thereby enriching IMS-enabled service scenarios. Refer to FIG. 1B, FIG. 1B is a schematic diagram of a multi-channel communication scenario in an IMS according to an embodiment of this application. As shown in FIG. 1B, the IMS may simultaneously support one or more of a video channel, an audio channel, and a data channel, and is configured to support interaction of a plurality of signaling messages.

The data channel is an additional channel in the IMS except the audio channel and the video channel. For setting of a QoS class identifier or a QoS indicator corresponding to the IMS, refer to FIG. 1C. FIG. 1C is a schematic diagram of a channel in an IMS according to an embodiment of this application. As shown in FIG. 1C, the IMS may establish, for a real-time audio and video application, a voice channel whose QoS class identifier (QoS class identifier, QCI) or 5th generation mobile communication technology QoS indicator (5th generation mobile communication technology QoS identifier, 5QI) is 1, a video channel whose QCI/5QI is 2, and an additional data channel having a higher priority and a lower packet loss rate compared to the audio channel and the video channel and whose 5QI is 71/72/73/74/76 or 5QI is 9.

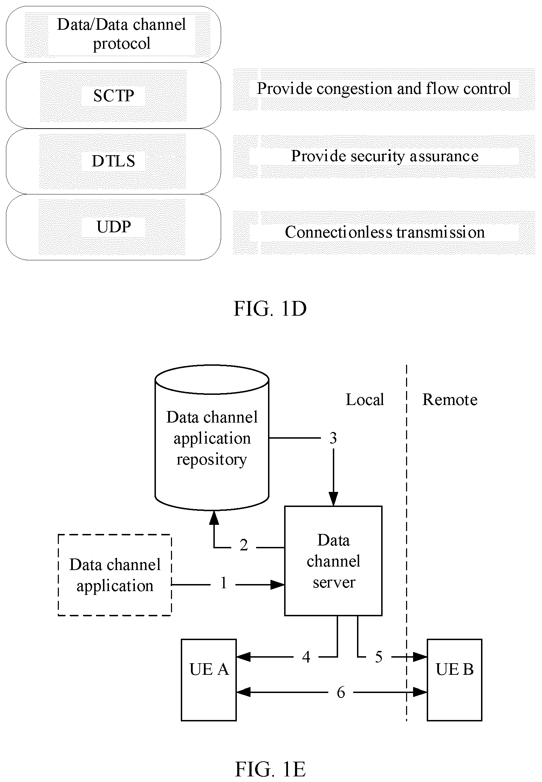

Technically, the IMS data channel may be considered as a newly added media type. As shown in FIG. 1D, FIG. 1D is a schematic diagram of a structure of an IMS bearer protocol according to an embodiment of this application. For the IMS data channel, a protocol stack used in web real-time communication (Web real-time communication, WebRTC) may be used. That is, datagram transport layer security (datagram transport layer security, DTLS) is superimposed on a stream control transmission protocol (stream control transmission protocol, SCTP), and interactive connectivity establishment (interactive connectivity establishment, ICE) and a user datagram protocol (user datagram protocol, UDP) are then superimposed to serve as a bearer protocol. A difference lies in that, as shown in FIG. 1D, in a data channel protocol stack corresponding to the IMS, only the UDP needs to be used at a bottom layer, and the ICE does not need to be used. The UDP at the bottom layer implements low latency communication, the DTLS at a middle layer implements data channel secure communication, and the SCTP at an upper layer supports establishment of a plurality of streams having different reliabilities in an SCTP connection to provide congestion and flow control.

In addition, refer to FIG. 1E, FIG. 1E is a schematic diagram of an operating principle of an IMS data channel according to an embodiment of this application. As shown in FIG. 1E, the operating principle of the IMS data channel may be described as the following several steps:
1. Upload a data channel application (an initial state of which is an offline application) to a data channel server.
2. The data channel server stores the data channel application into a data channel application repository.
3. The data channel server reads a specific data channel application from the data channel application repository when necessary.
4. The data channel server sends the specific data channel application to UE A through the pilot data channel.
5. Optionally/In parallel/Separately, the data channel server sends the specific data channel application to UE B through the pilot data channel.
6. An additional data channel is established between UE A and UE B for communication.

Steps 1 to 4 are used for supporting a terminal in downloading a web application from the IMS, and steps 5 and 6 are used for supporting real-time and non-real-time data communication between same web applications on different user equipments.

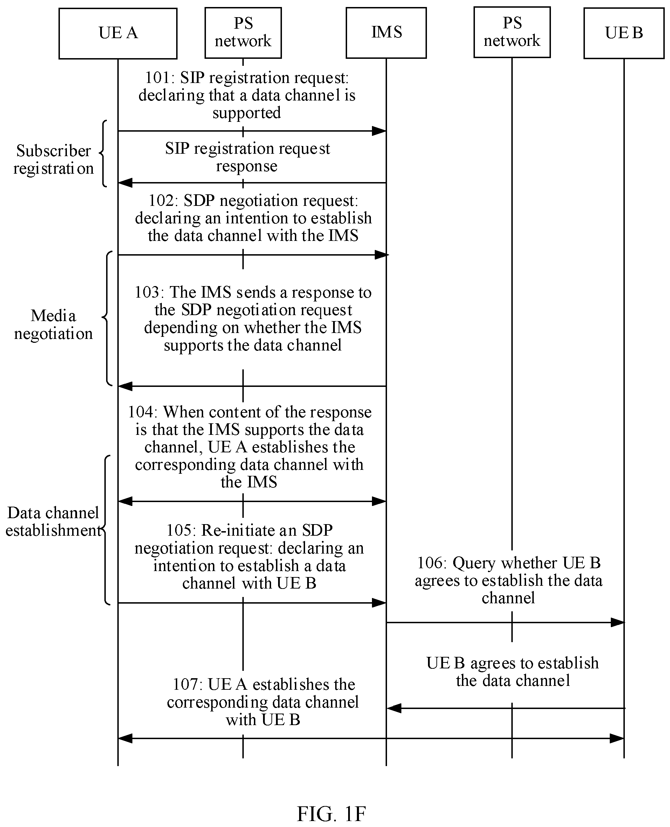

As described above, the IMS data channel may adopt a protocol stack similar to the protocol stack in the WebRTC, to enable a user equipment and an IMS network to mutually sense whether the other party supports establishment of a data channel through session initiation protocol (session initiation protocol, SIP) registration and session description protocol (session description protocol, SDP) negotiation. Refer to FIG. 1F for details. FIG. 1F is a schematic flowchart of establishing a data channel according to an embodiment of this application. As shown in FIG. 1F, UEs (including a UE A and a UE B) are connected to an IMS over a packet switching (packet switching, PS) network, and specifically, the following steps may be included:
101: The UE A sends a SIP registration request message to the IMS to perform SIP registration. The IMS sends a SIP registration request response for the SIP registration request message sent by UE A, to complete a registration process of UE A. The SIP registration request message includes indication information indicating that the user equipment supports a data channel, so as to declare that UE A supports the data channel.

In FIG. 1F, a SIP registration request process is described by using UE A as an example. Actually, all UEs that need to perform communication over the IMS need to perform SIP registration on the IMS, that is, UE B also has a corresponding SIP registration process.

102: The UE A initiates an SDP negotiation request, declaring that UE A intends to establish a data channel with the IMS.

103: The IMS sends an SDP negotiation request response to UE A, where content of the response includes indication information indicating whether the IMS supports the data channel.

The content of the response includes indication information indicating that the IMS supports the data channel, and UE A establishes the corresponding data channel with the IMS.

In the foregoing example of steps 102 to 104, assuming that UE A only needs to establish the data channel with the IMS for communication, for example, downloads a web technology-based application from the IMS. In this case, the IMS sends a response to the SDP negotiation request about the data channel of UE A depending on whether the IMS supports the data channel, and when the content of the response is that the IMS supports the data channel, UE A may establish a pilot data channel with the IMS.

In some other examples, assuming that UE A needs to establish communication including a data channel with UE B, for example, performs data communication based on a same application, after UE A establishes the pilot data channel with the IMS, the following steps are further included:
105: The UE A re-initiates an SDP negotiation request, declaring that UE A intends to establish an end-to-end data channel with UE B.
106: After receiving the SDP negotiation request re-sent by UE A, the IMS queries whether UE B agrees to establish the data channel with UE A. The UE B is a user equipment that has completed SIP registration on the IMS and has established a pilot data channel.
107: The UE A receives response content from the IMS, including that UE B agrees to establish the data channel, and UE A establishes the corresponding data channel with UE B.

It can be learned from the descriptions of the foregoing process that, when a user equipment wants to perform data channel-related communication, it is necessary to implement a pilot data channel (no matter for a case that the user equipment downloads a web technology-based application from the IMS, or for data communication between same applications on different user equipments over the IMS), but it is unnecessary to implement an end-to-end data channel (for example, for a case that the user equipment downloads a web technology-based application from the IMS, only the pilot data channel may be established).

In addition, in the SIP registration process of the UE, currently, only the UE indicate to the IMS whether the UE supports the data channel, but the IMS does not indicate to the UE whether the IMS supports the data channel. In this way, the UE may sense whether the IMS supports the data channel only after the SDP negotiation is completed (whether the IMS supports the data channel refers to whether the IMS supports a data channel server and a data channel application repository). In this case, when the IMS does not support the data channel, the UE also initiates data channel-related SDP negotiation, which wastes resources prepared by the UE side for using the data channel and increases signaling exchange content between the UE and the IMS.

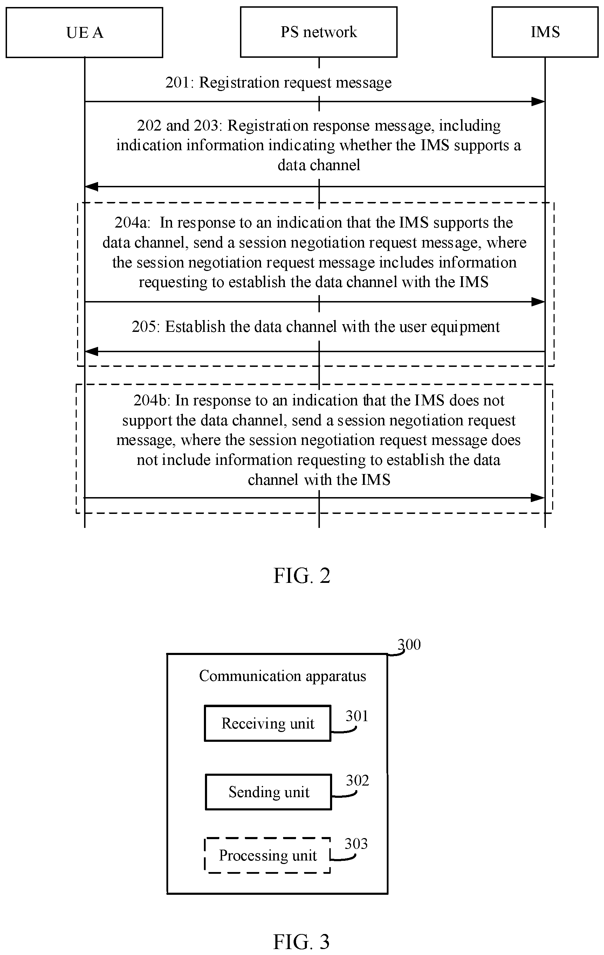

Based on this, refer to FIG. 2. FIG. 2 is a flowchart of an information transmission method according to an embodiment of this application. As shown in FIG. 2, the method includes the following steps:
201: A user equipment (UE A) sends a registration request message to an IMS.
202: The IMS (usually an S-CSCF in the IMS) receives the registration request message of the user equipment, and the S-CSCF sends a registration response message for the registration request message, where the registration response message includes indication information indicating whether the IMS supports a data channel.
203: The UE A receives the registration response message.

The UE A sends a registration request to the IMS, that is, the foregoing SIP registration process in FIG. 1F. The sent registration request includes an IP address corresponding to UE A (SIP subscriber). After the S-CSCF receives the registration request message of UE A, the received information may be stored, so that in a subsequent SDP negotiation process, if another user equipment wants to send information to UE A, the corresponding IP address may be obtained from the S-CSCF.

After completing information registration such as the IP address of UE A, the S-CSCF may send a registration response message for the registration request message to UE A, to reply to UE A with information such as whether registration of UE A succeeds. In addition, in this embodiment of this application, the S-CSCF may send, to UE A, the indication information indicating whether the IMS supports the data channel. Specifically, the S-CSCF may newly add a parameter in the IMS registration response by using a feature-capabilities header field to indicate that the IMS supports establishment of a data channel, for example, a newly added parameter "+sip.subtype=webrtc-datachannel". If the parameter is not included in the Feature-Caps header field, it indicates that the IMS does not support the establishment of the data channel. Alternatively, for the parameter, there is a corresponding indication field, when a value of the indication field is "false", it indicates that the establishment of the data channel is not supported, and when the value of the indication field is "true", it indicates that the establishment of the data channel is supported.

It can be learned that, in this embodiment of this application, when responding to the registration message of the user equipment, the IMS actively indicates, to the user equipment, whether the IMS supports the data channel, thereby improving efficiency of the user equipment in learning whether the IMS supports the data channel, helping the user equipment initiate, in a targeted manner, a session negotiation request to the IMS that supports the data channel, and improving efficiency of session negotiation.

Optionally, the registration request message includes indication information indicating that the user equipment supports the data channel.

Specifically, the registration request message may include the information indicating that the user equipment supports the data channel. That is, UE A first reports that UE A supports the data channel, and then the S-CSCF sends, in the registration response message, indication information indicating whether the S-CSCF supports the data channel. In this way, the S-CSCF can send, in a more targeted manner, a response of a situation of supporting the data channel.

Optionally, assuming that UE A reports that UE A does not support the data channel, the S-CSCF may also send, in the registration response message, indication information indicating whether the S-CSCF supports the data channel. That is, as long as the registration request message includes whether UE A supports the data channel (including supporting/not supporting the data channel), the S-CSCF may send, in the registration response message, the indication information indicating whether the S-CSCF supports the data channel.

In addition, the method in this embodiment of this application may further include step 204a: The UE A sends a session negotiation request message to the IMS in response to an indication that the IMS supports the data channel, where the session negotiation request message includes information for requesting to establish the data channel with the IMS. 205: The S-CSCF receives the session negotiation request message sent by the user equipment, and establishes the data channel with the user equipment based on the session negotiation request message.

Specifically, UE A initiates a session negotiation request to the IMS (usually the S-CSCF), which is specifically an SDP negotiation request. In this request process, content of a sent SDP offer (offer) may be shown in Table 1:

### Table 1

| |
|---|
| ```
 SDP offer
``` |
| ```
 m=application 52718 UDP/DTLS/SCTP webrtc-datachannel
 b=AS:500
 a=max-message-size:1024
 a=sctp-port:5000
 a=setup:actpass
 a=fingerprint: SHA-1
 4A:AD:B9:B1:3F:82:18:3B:54:02:12:DF:3E:SD:49:6B:19:E5:7C:AB
 a=tls-id: abc3de65cddef001be82
 a=dcmap:0 subprotocol="http"
``` |

In Table 1, the data channel indicates: an additional data channel provided by the IMS based on a voice channel and a video channel. The IMS data channel supports a terminal in downloading a web technology-based application from the IMS and implement real-time and non-real-time data communication between same web applications on different terminals.

The following is an example of the m line in SDP: m=application 52718 UDP/DTLS/SCTP webrtc-datachannel, and specific meanings are as follows:
the first parameter is <media>, indicating a media type, where the application herein indicates an application;
the second parameter is <port>, indicating a port number used for communication, where the port number herein is 52718;
the third parameter is <proto>, indicating a used transmission protocol, where the transmission protocol herein is SCTP over DTLS over UDP; and
the fourth parameter is <fmt>, indicating a media format, where the parameter in the data channel indicates a data channel based on a WebRTC standard, that is, webrtc-datachannel.

Optionally, the SDP negotiation request message sent by UE A to the IMS may further include an SDP offer requesting to establish a video channel or an audio channel.

For a voice channel/voice channel: The SDP offer is used for transmitting real-time voice. In mobile communication, codec protocols such as adaptive multi-rate (adaptive multi-rate, AMR), adaptive multi-rate wideband (adaptive multi-rate wideband, AMR-WB), and enhanced voice service (enhanced voice service, EVS) are used, and a transport protocol is a real-time transport protocol (real-time transport protocol, RTP).

The following is an example of the m line in SDP: m=audio 49170 RTP/AVP 0, and specific meanings are as follows:
the first parameter is <media>, indicating a media type, where the audio here indicates audio;
the second parameter is <port>, indicating a port number used for communication, where the port number herein is 49170;
the third parameter is <proto>, indicating a used transmission protocol, where the transmission protocol here is an RTP/an audio video profile (audio video profile, AVP); and
the fourth parameter is <fmt>, indicating a media format, where the parameter in the audio channel indicates a value of a valid payload type, and the value herein is 0.

For a video channel/video channel: The SDP offer is used for transmitting a real-time video. In mobile communication, codec protocols such as H.264 and H.265 are used, and a transmission protocol is an RTP.

The following is an example of the m line in SDP: m=video 51372 RTP/AVP 99, and specific meanings are as follows:
the first parameter is <media>, indicating a media type, where the video here indicates a video;
the second parameter is <port>, indicating a port number used for communication, where the port number herein is 51372;
the third parameter is <proto>, indicating a used transmission protocol, where the transmission protocol here is an RTP/an AVP; and
the fourth parameter is <fmt>, indicating a media format, where the parameter in the video channel indicates a value of a payload type, and the value herein is 99.

It can be learned from the foregoing descriptions that, in SDP negotiation processes initiated among the data channel, the audio channel, and the video channel, corresponding port numbers, protocol stacks, media types, and media formats are all different. In a sent session request message, UE A may request to establish the three channels at the same time; or may request to establish one or two of the three channels; or may not request to establish any one of the three channels, and in a subsequent IMS session process, append one or more of the channels.

Optionally, the method in this embodiment of this application may further include step 204b: The UE A sends a session negotiation request message to the IMS in response to an indication that the IMS does not support the data channel, where the session negotiation request message does not include information for requesting to establish the data channel with the IMS.

When UE A learns that the IMS does not support the data channel, UE A may send the session negotiation request message to the IMS, but the session negotiation message does not include the information for requesting to establish the data channel with the IMS. Optionally, information for requesting to establish a video channel or an audio channel with the IMS may be included. That is, UE A learns the information that is actively responded by the IMS and indicates whether the data channel is supported, and when the IMS does not support the data channel, UE A does not initiate a request for establishing the data channel to the IMS, thereby reducing waste of resource preparation and a signaling exchange that may be caused by SDP negotiation initiated by the user equipment when the IMS does not support the data channel.

Optionally, the method further includes 206: The IMS receives the session negotiation request of the user equipment, and establishes the data channel with the user equipment when the session negotiation request includes the information for requesting to establish the data channel with the IMS.

That is, when receiving the information for establishing the data channel from UE A, the IMS directly establishes the data channel with UE A without verifying whether the IMS supports the data channel. By default, UE A initiates the targeted information for establishing the data channel after receiving the indication information indicating that the IMS supports the data channel. This process further improves efficiency of establishing a data channel between the user equipment and the IMS.

FIG. 3 shows a communication apparatus 300 according to an embodiment of this application, and the communication apparatus 300 may be configured to perform the method and specific embodiments performed by the IMS (or the S-CSCF) in FIG. 2. In a possible implementation, as shown in FIG. 3, the apparatus 300 includes a receiving unit 301 and a sending unit 302.

The receiving unit 301 is configured to receive a registration request message of a user equipment; and
the sending unit 302 is configured to send a registration response message for the registration request message, where the registration response message includes indication information indicating whether the IMS supports a data channel.

Optionally, the registration request message includes indication information indicating that the user equipment supports the data channel.

Optionally, the receiving unit 301 is further configured to: receive a session negotiation request message sent by the user equipment, where the session negotiation request message includes information for requesting to establish the data channel with the IMS; and establish the data channel with the user equipment based on the session negotiation request message.

Optionally, the data channel supports the user equipment in downloading an application from the IMS; and/or the data channel supports data communication between same applications on different user equipments.

Optionally, the communication apparatus 300 may further include a processing unit 303, and the processing unit 303 may be a central processing unit (Central Processing Unit, CPU).

Optionally, the receiving unit 301 and the sending unit 302 may be an interface circuit or a transceiver, and are configured to receive or send data or instructions from another electronic apparatus.

Optionally, the communication apparatus 300 may further include a storage unit (not shown in the figure), where the storage unit may be configured to store data and/or signaling, and the storage unit may be coupled to the receiving unit 301, the sending unit 302, and the processing unit 303. For example, the processing unit 303 may be configured to read the data and/or signaling in the storage unit, so that a channel processing process in the foregoing method embodiment is performed.

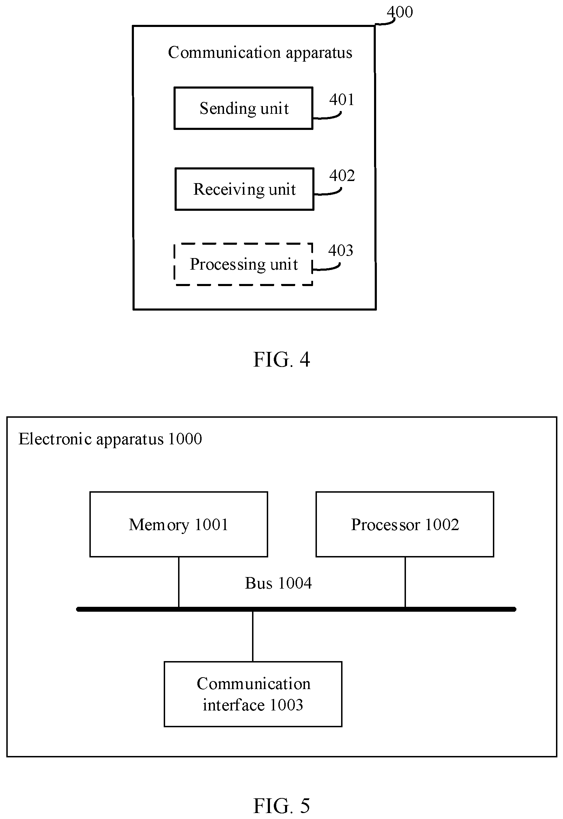

FIG. 4 shows a communication apparatus 400 according to an embodiment of this application, and the communication apparatus 400 may be configured to perform the method and specific embodiments performed by the user equipment in FIG. 2. In a possible implementation, as shown in FIG. 4, the apparatus 400 includes a sending unit 401 and a receiving unit 402.

The sending unit 401 is configured to send a registration request message to an IMS; and
the receiving unit 402 is configured to receive a registration response message sent by the IMS, where the registration response message includes indication information indicating whether the IMS supports a data channel.

Optionally, the registration request message includes indication information indicating that the user equipment supports the data channel.

Optionally, the sending unit 401 is further configured to: send a session negotiation request message to the IMS in response to an indication that the IMS supports the data channel, where the session negotiation request message includes information for requesting to establish the data channel with the IMS.

Optionally, the sending unit 401 is further configured to: send a session negotiation request message to the IMS in response to an indication that the IMS does not support the data channel, where the session negotiation request message does not include information for requesting to establish the data channel with the IMS.

Optionally, the session negotiation request message includes a message requesting to establish an audio channel and/or a video channel with the IMS.

Optionally, the communication apparatus 400 may further include a processing unit 403, and the processing unit 403 may be a central processing unit (Central Processing Unit, CPU).

Optionally, the receiving unit 402 and the sending unit 401 may be an interface circuit or a transceiver, and are configured to receive or send data or signaling from another electronic device.

Optionally, the communication apparatus 400 may further include a storage unit (not shown in the figure), where the storage unit may be configured to store data and/or signaling, and the storage unit may be coupled to the receiving unit 402, the sending unit 401, and the processing unit 403.

As shown in FIG. 5, FIG. 5 is a schematic diagram of a hardware structure of an electronic apparatus according to an embodiment of this application. For structures of the communication apparatus 300 and the communication apparatus 400, refer to the structure shown in FIG. 5. The electronic apparatus 1000 includes: a memory 1001, a processor 1002, a communication interface 1003, and a bus 1004. The memory 1001, the processor 1002, and the communication interface 1003 are communicatively connected to each other through the bus 1004.

The memory 1001 may be a read only memory (Read Only Memory, ROM), a static storage device, a dynamic storage device, or a random access memory (Random Access Memory, RAM). The memory 1001 stores a program. When the program stored in the memory 1001 is executed by the processor 1002, the processor 1002 and the communication interface 1003 are configured to perform steps of the method in this embodiment of this application.

The processor 1002 may be a general-purpose CPU, a microprocessor, an application-specific integrated circuit (Application Specific Integrated Circuit, ASIC), a GPU, or one or more integrated circuits, and is configured to execute a related program, so as to implement functions that need to be performed by the receiving unit 301 and the sending unit 302 in the communication apparatus 300 in embodiments of this application, or implement functions that need to be performed by the sending unit 401 and the receiving unit 402 in the communication apparatus 400, or perform the information transmission method in the method embodiments of this application.

The processor 1002 may alternatively be an integrated circuit chip, and has a signal processing capability. In an implementation process, the steps of the distributed rendering method in this application may be completed by an integrated logic circuit of hardware in the processor 1002 or by instructions in a form of software. The processor 1002 may be a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor. Steps of the methods disclosed with reference to embodiments of this application may be directly performed and completed by using a hardware decoding processor, or may be performed and completed by using a combination of hardware and a software module in a decoding processor. The software module may be located in a storage medium that is mature in the art, such as a random access memory, a flash memory, a read-only memory, a programmable read-only memory, an electrically erasable programmable memory, a register, or the like. The storage medium is located in the memory 1001, and the processor 1002 reads information in the memory 1001, and completes, with reference to hardware of the processor, a function that needs to be performed by a module included in the communication apparatus 300 or the communication apparatus 400 in embodiments of this application, or performs the information transmission method in the method embodiments of this application.

The communication interface 1003 uses a transceiver apparatus such as, but not limited to, a transceiver, to implement communication between the electronic apparatus 1000 and another device or a communication network. For example, a determined segmentation target and/or a candidate target boundary box may be obtained through the communication interface 1003. The bus 1004 may include a channel that transmits information between each component (for example, the memory 1001, the processor 1002, and the communication interface 1003) of the electronic apparatus 1000.

It should be noted that, although the electronic apparatus 1000 shown in FIG. 5 shows only a memory, a processor, and a communication interface, in a specific implementation process, a person skilled in the art should understand that the electronic apparatus 1000 further includes another device that is essential for implementing normal operation. In addition, according to a specific requirement, a person skilled in the art should understand that the electronic apparatus 1000 may further include a hardware device for implementing another additional function. In addition, a person skilled in the art should understand that the electronic apparatus 1000 may alternatively include only devices that are essential for implementing embodiments of this application, and does not need to include all the devices shown in FIG. 5.

An embodiment of this application further provides a communication system, where the communication system includes a first communication apparatus and a second communication apparatus. The first communication apparatus may be configured to perform the method performed by the IMS (or the S-CSCF) in FIG. 3, and the second communication apparatus may be configured to perform the method performed by the user equipment in FIG. 3.

In addition, this application further provides a computer program, where the computer program is configured to implement an operation and/or processing performed by the first communication apparatus in the method of this application.

This application further provides a computer program, where the computer program is configured to implement an operation and/or processing performed by the second communication apparatus in the method of this application.

This application further provides a computer-readable storage medium, where the computer-readable storage medium stores a computer program or computer-executable instructions, and when the computer program or the computer-executable instructions are run on a computer, the computer is enabled to perform an operation and/or processing performed by the first communication apparatus in the method of this application.

This application further provides a computer-readable storage medium, where the computer-readable storage medium stores a computer program or computer-executable instructions, and when the computer program or the computer-executable instructions are run on a computer, the computer is enabled to perform an operation and/or processing performed by the second communication apparatus in the method of this application.

This application further provides a computer program product, where the computer program product includes computer-executable instructions or a computer program, and when the computer-executable instructions or the computer program is run on a computer, an operation and/or processing performed by the first communication apparatus in the method of this application is performed.

This application further provides a computer program product, where the computer program product includes computer-executable instructions or a computer program, and when the computer-executable instructions or the computer program is run on a computer, an operation and/or processing performed by the second communication apparatus in the method of this application is performed.

It should be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, modules and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and module, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division of the modules is merely logical function division and there may be other division manners in an actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, that is, may be located in one position, or may be distributed on a plurality of network modules. Some or all of the modules may be selected based on an actual requirement to achieve the objectives of the solutions of embodiments.

In addition, functional modules in embodiments of this application may be integrated into one processing module, or each of the modules may exist alone physically, or two or more modules are integrated into one module.

When the functions are implemented in a form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

## Claims

1. An information transmission method, applied to an Internet protocol multimedia subsystem IMS, wherein the method comprises:
receiving, by an S-CSCF in the IMS or a chip system, a registration request message of a user equipment; and
sending, by the S-CSCF or the chip system, a registration response message for the registration request message, the method being **characterized in that** the registration response message comprises indication information indicating whether the IMS supports a data channel.

2. The method according to claim 1, wherein the registration request message comprises indication information indicating that the user equipment supports the data channel.

3. The method according to claim 1 or 2, wherein the method further comprises:
receiving a session negotiation request message sent by the user equipment, wherein the session negotiation request message comprises information for requesting to establish the data channel with the IMS; and
establishing the data channel with the user equipment based on the session negotiation request message.

4. The method according to any one of claims 1 to 3, wherein the data channel supports the user equipment in downloading an application from the IMS; and/or
the data channel supports data communication between same applications on different user equipments.

5. An information transmission method, applied to a user equipment or a chip system, wherein the method comprises:
sending a registration request message to an Internet protocol multimedia subsystem IMS; and
receiving a registration response message sent by the IMS, the method being **characterized in that** the registration response message comprises indication information indicating whether the IMS supports a data channel.

6. The method according to claim 5, wherein the registration request message comprises indication information indicating that the user equipment supports the data channel.

7. The method according to claim 5 or 6, wherein the method further comprises:
sending a session negotiation request message to the IMS in response to an indication that the IMS supports the data channel, wherein the session negotiation request message comprises information for requesting to establish the data channel with the IMS.

8. The method according to claim 5 or 6, wherein the method further comprises:
sending a session negotiation request message to the IMS in response to an indication that the IMS does not support the data channel, wherein the session negotiation request message does not comprise information for requesting to establish the data channel with the IMS.

9. The method according to claim 7 or 8, wherein the session negotiation request message comprises a message requesting to establish an audio channel and/or a video channel with the IMS.

10. An information transmission method, applied to a communication system, wherein the communication system comprises an Internet protocol multimedia subsystem IMS and a user equipment, and the method comprises:
sending, by the user equipment, a registration request message to the Internet protocol multimedia subsystem IMS;
receiving, by an S-CSCF in the IMS, the registration request message of the user equipment;
sending, by the S-CSCF, a registration response message for the registration request message, wherein the registration response message comprises indication information indicating whether the IMS supports a data channel; and
receiving, by the user equipment, the registration response message sent by the IMS.

11. The method according to claim 10, wherein the registration request message comprises indication information indicating that the user equipment supports the data channel.

12. The method according to claim 10 or 11, wherein the method further comprises:
sending, by the user equipment, a session negotiation request message to the IMS in response to an indication that the IMS supports the data channel, wherein the session negotiation request message comprises information for requesting to establish the data channel with the IMS; and
receiving, by the IMS, the session negotiation request message sent by the user equipment, and establishing the data channel with the user equipment based on the session negotiation request message.

13. A computer-readable storage medium, storing instructions, wherein when the instructions are run, the method according to any one of claims 1 - 4 is implemented, or the method according to any one of claims 5 to 9 is implemented.

14. A chip system, comprising: a processor, wherein the processor is configured to execute a stored computer program, and the computer program is configured to perform the method according to any one of claims 1 to 4, or the method according to any one of claims 5 to 9.

15. A computer program product, comprising: a computer program, wherein when the computer program is run, the method according to any one of claims 1 to 4 is performed, or the method according to any one of claims 5 to 9 is performed.

16. A communication apparatus, comprising a memory and a processor, wherein
the memory is configured to store program instructions; and
the processor is configured to invoke the program instructions in the memory to perform the method according to any one of claims 1 to 4, or to perform the method according to any one of claims 5-9.

## Patentansprüche

1. Informationsübertragungsverfahren, das auf ein Internetprotokoll-Multimediauntersystem, IMS, angewendet wird, wobei das Verfahren Folgendes umfasst:
Empfangen durch eine S-CSCF in dem IMS oder ein Chipsystem einer Registrierungsanforderungsnachricht einer Benutzereinrichtung; und
Senden durch die S-CSCF oder das Chipsystem einer Registrierungsantwortnachricht für die Registrierungsanforderungsnachricht, wobei das Verfahren **dadurch gekennzeichnet ist, dass** die Registrierungsantwortnachricht Angabeinformationen umfasst, die angeben, ob das IMS einen Datenkanal unterstützt.

2. Verfahren nach Anspruch 1, wobei die Registrierungsanforderungsnachricht Angabeinformationen umfasst, die angeben, dass die Benutzereinrichtung den Datenkanal unterstützt.

3. Verfahren nach Anspruch 1 oder 2, wobei das Verfahren ferner Folgendes umfasst:
Empfangen einer Sitzungsverhandlungs-Anforderungsnachricht, die durch die Benutzereinrichtung gesendet wird, wobei die Sitzungsverhandlungs-Anforderungsnachricht Informationen umfasst, um anzufordern, den Datenkanal mit dem IMS einzurichten; und
Einrichten des Datenkanals mit der Benutzereinrichtung anhand der Sitzungsverhandlungs-Anforderungsnachricht.

4. Verfahren nach einem der Ansprüche 1 bis 3, wobei der Datenkanal die Benutzereinrichtung beim Herunterladen einer Anwendung von dem IMS unterstützt; und/oder
der Datenkanal eine Datenkommunikation zwischen denselben Anwendungen auf verschiedenen Benutzereinrichtungen unterstützt.

5. Informationsübertragungsverfahren, das auf eine Benutzereinrichtung oder ein Chipsystem angewendet wird, wobei das Verfahren Folgendes umfasst:
Senden einer Registrierungsanforderungsnachricht an ein Internetprotokoll-Multimediauntersystem, IMS; und
Empfangen einer Registrierungsantwortnachricht, die durch das IMS gesendet wird, wobei das Verfahren **dadurch gekennzeichnet ist, dass** die Registrierungsantwortnachricht Folgendes umfasst:
Angabeinformationen, die angeben, ob das IMS einen Datenkanal unterstützt.

6. Verfahren nach Anspruch 5, wobei die Registrierungsanforderungsnachricht Angabeinformationen umfasst, die angeben, dass die Benutzereinrichtung den Datenkanal unterstützt.

7. Verfahren nach Anspruch 5 oder 6, wobei das Verfahren ferner Folgendes umfasst:
Senden einer Sitzungsverhandlungs-Anforderungsnachricht an das IMS in Reaktion auf eine Angabe, dass das IMS den Datenkanal unterstützt, wobei die Sitzungsverhandlungs-Anforderungsnachricht Informationen umfasst, um anzufordern, den Datenkanal mit dem IMS einzurichten.

8. Verfahren nach Anspruch 5 oder 6, wobei das Verfahren ferner Folgendes umfasst:
Senden einer Sitzungsverhandlungs-Anforderungsnachricht an das IMS in Reaktion auf eine Angabe, dass das IMS den Datenkanal nicht unterstützt, wobei die Sitzungsverhandlungs-Anforderungsnachricht keine Informationen umfasst, um anzufordern, den Datenkanal mit dem IMS einzurichten.

9. Verfahren nach Anspruch 7 oder 8, wobei die Sitzungsverhandlungs-Anforderungsnachricht eine Nachricht umfasst, um anzufordern, einen Audiokanal und/oder einen Videokanal mit dem IMS einzurichten.

10. Informationsübertragungsverfahren, das auf ein Kommunikationssystem angewendet wird, wobei das Kommunikationssystem ein Internetprotokoll-Multimediauntersystem, IMS, und eine Benutzereinrichtung umfasst, wobei das Verfahren Folgendes umfasst:
Senden durch die Benutzereinrichtung einer Registrierungsanforderungsnachricht an das Internetprotokoll-Multimediauntersystem, IMS;
Empfangen durch eine S-CSCF in dem IMS der Registrierungsanforderungsnachricht der Benutzereinrichtung;
Senden durch die S-CSCF einer Registrierungsantwortnachricht für die Registrierungsanforderungsnachricht, wobei die Registrierungsantwortnachricht Angabeinformationen umfasst, die angeben, ob das IMS einen Datenkanal unterstützt; und Empfangen durch die Benutzereinrichtung der Registrierungsantwortnachricht, die durch das IMS gesendet wird.

11. Verfahren nach Anspruch 10, wobei die Registrierungsanforderungsnachricht Angabeinformationen umfasst, die angeben, dass die Benutzereinrichtung den Datenkanal unterstützt.

12. Verfahren nach Anspruch 10 oder 11, wobei das Verfahren ferner Folgendes umfasst:
Senden durch die Benutzereinrichtung einer Sitzungsverhandlungs-Anforderungsnachricht an das IMS in Reaktion auf eine Angabe, dass das IMS den Datenkanal unterstützt, wobei die Sitzungsverhandlungs-Anforderungsnachricht Informationen umfasst, um anzufordern, den Datenkanal mit dem IMS einzurichten; und
Empfangen durch das IMS der Sitzungsverhandlungs-Anforderungsnachricht, die durch die Benutzereinrichtung gesendet wird, und Einrichten des Datenkanals mit der Benutzereinrichtung anhand der Sitzungsverhandlungs-Anforderungsnachricht.

13. Computerlesbares Speichermedium, das Anweisungen speichert, wobei dann, wenn die Anweisungen ausgeführt werden, das Verfahren nach einem der Ansprüche 1 bis 4 implementiert wird oder das Verfahren nach einem der Ansprüche 5 bis 9 implementiert wird.

14. Chip-System, das Folgendes umfasst: einen Prozessor, wobei der Prozessor konfiguriert ist, ein gespeichertes Computerprogramm auszuführen, und das Computerprogramm konfiguriert ist, das Verfahren nach einem der Ansprüche 1 bis 4 oder das Verfahren nach einem der Ansprüche 5 bis 9 auszuführen.

15. Computerprogrammprodukt, das Folgendes umfasst: ein Computerprogramm, wobei dann, wenn das Computerprogramm ausgeführt wird, das Verfahren nach einem der Ansprüche 1 bis 4 ausgeführt wird oder das Verfahren nach einem der Ansprüche 5 bis 9 ausgeführt wird.

16. Kommunikationsvorrichtung, die einen Speicher und einen Prozessor umfasst, wobei
der Speicher konfiguriert ist, Programmanweisungen zu speichern; und
der Prozessor konfiguriert ist, die Programmanweisungen in dem Speicher aufzurufen, um das Verfahren nach einem der Ansprüche 1 bis 4 auszuführen oder das Verfahren nach einem der Ansprüche 5-9 auszuführen.

## Revendications

1. Procédé de transmission d'informations, appliqué à un sous-système multimédia à protocole Internet, IMS, ce procédé comprenant :
la réception, par une fonction de commande d'appel de service, S-CSCF, dans l'IMS, ou par un système sur puce, d'un message de demande d'enregistrement d'un équipement utilisateur ; et
l'envoi, par la fonction S-CSCF ou par le système sur puce, d'un message de réponse d'enregistrement relatif au message de demande d'enregistrement, ce procédé étant **caractérisé en ce que** le message de réponse d'enregistrement comprend des informations d'indication indiquant si l'IMS prend en charge ou pas un canal de données.

2. Procédé selon la revendication 1, dans lequel le message de demande d'enregistrement comprend des informations d'indication indiquant que l'équipement utilisateur prend en charge le canal de données.

3. Procédé selon la revendication 1 ou 2, ce procédé comprenant en outre :
la réception d'un message de demande de négociation de session envoyé par l'équipement utilisateur, ce message de demande de négociation de session comprenant des informations pour demander l'établissement du canal de données avec l'IMS ; et
l'établissement du canal de données avec l'équipement utilisateur en se basant sur le message de demande de négociation de session.

4. Procédé selon l'une quelconque des revendications 1 à 3, dans lequel le canal de données prend en charge l'équipement utilisateur dans le téléchargement d'une application à partir de l'IMS ; et/ou dans lequel
le canal de données prend en charge la communication de données entre des applications identiques sur des équipements utilisateurs différents.

5. Procédé de transmission d'informations, appliqué à un équipement utilisateur ou à un système sur puce, ce procédé comprenant :
l'envoi d'un message de demande d'enregistrement à un sous-système multimédia à protocole Internet, IMS ; et
la réception d'un message de réponse d'enregistrement envoyé par l'IMS, ce procédé étant **caractérisé en ce que** le message de réponse d'enregistrement comprend des informations d'indication indiquant si l'IMS prend en charge ou pas un canal de données.

6. Procédé selon la revendication 5, dans lequel le message de demande d'enregistrement comprend des informations d'indication indiquant que l'équipement utilisateur prend en charge le canal de données.

7. Procédé selon la revendication 5 ou 6, ce procédé comprenant en outre :
l'envoi d'un message de demande de négociation de session à l'IMS en réponse à une indication que l'IMS prend en charge le canal de données, ce message de demande de négociation de session comprenant des informations pour demander l'établissement du canal de données avec l'IMS.

8. Procédé selon la revendication 5 ou 6, ce procédé comprenant en outre :
l'envoi d'un message de demande de négociation de session à l'IMS en réponse à une indication que l'IMS ne prend pas en charge le canal de données, ce message de demande de négociation de session ne comprenant pas d'informations pour demander l'établissement du canal de données avec l'IMS.

9. Procédé selon la revendication 7 ou 8, dans lequel le message de demande de négociation de session comprend un message demandant l'établissement d'un canal audio et/ou d'un canal vidéo avec l'IMS.

10. Procédé de transmission d'informations, appliqué à un système de communication, ce système de communication comprenant un sous-système multimédia à protocole Internet, IMS, et un équipement utilisateur, et ce procédé comprenant :
l'envoi, par l'équipement utilisateur, d'un message de demande d'enregistrement au sous-système multimédia à protocole Internet, IMS ;
la réception, par une fonction S-CSCF dans l'IMS, du message de demande d'enregistrement de l'équipement utilisateur ;
l'envoi, par la fonction S-CSCF, d'un message de réponse d'enregistrement pour le message de demande d'enregistrement, ce message de réponse d'enregistrement comprenant des informations d'indication indiquant si l'IMS prend en charge ou pas un canal de données ; et
la réception, par l'équipement utilisateur, du message de réponse d'enregistrement envoyé par l'IMS.

11. Procédé selon la revendication 10, dans lequel le message de demande d'enregistrement comprend des informations d'indication indiquant que l'équipement utilisateur prend en charge le canal de données.

12. Procédé selon la revendication 10 ou 11, ce procédé comprenant en outre :
l'envoi, par l'équipement utilisateur, d'un message de demande de négociation de session à l'IMS en réponse à une indication que l'IMS prend en charge le canal de données, ce message de demande de négociation de session comprenant des informations pour demander l'établissement du canal de données avec l'IMS ; et
la réception, par l'IMS, du message de demande de négociation de session envoyé par l'équipement utilisateur, et l'établissement du canal de données avec l'équipement utilisateur en se basant sur le message de demande de négociation de session.

13. Support de stockage lisible par ordinateur, stockant des instructions, et, lorsque ces instructions sont exécutées, le procédé selon l'une quelconque des revendications 1 à 4 est mis en œuvre, ou le procédé selon l'une quelconque des revendications 5 à 9 est mis en œuvre.

14. Système sur puce, comprenant : un processeur, ce processeur étant configuré de façon à exécuter un programme informatique stocké, et ce programme informatique étant configuré de façon à exécuter le procédé selon l'une quelconque des revendications 1 à 4, ou le procédé selon l'une quelconque des revendications 5 à 9.

15. Progiciel, comprenant : un programme informatique, et, lorsque ce programme informatique est exécuté, le procédé selon l'une quelconque des revendications 1 à 4 est exécuté, ou le procédé selon l'une quelconque des revendications 5 à 9 est exécuté.

16. Appareil de communication, comprenant une mémoire et un processeur, dans lequel
la mémoire est configurée pour stocker des instructions de programme ; et
le processeur est configuré pour appeler les instructions de programme dans la mémoire afin de réaliser le procédé selon l'une quelconque des revendications 1 à 4, ou de réaliser le procédé selon l'une quelconque des revendications 5 à 9.
